# EUROPEAN PATENT APPLICATION

(11) **EP 4 527 898 A1**
(43) Date of publication of application: **26.03.2025**
(21) Application number: 23199058.1
(22) Date of filing: 22.09.2023
(51) Int. Cl.: C09D 5/00

(54) **AQUEOUS COMPOSITION FOR BARRIER COATING**

(71) Applicant: Henkel AG & Co. KGaA, 40589 Düsseldorf (DE)
(72) Inventor: MISIAK, Hanns, 42781 Haan (DE); NEITZKE, Daniela, 40589 Düsseldorf (DE); TOMKE, Stefan, 46147 Oberhausen (DE)

(57) **Abstract**

The invention relates to an aqueous composition for barrier coating, in particular an aqueous composition for barrier coating comprising a clay, a vinyl alcohol based polymer, a polyethylene imine and a polyether siloxane copolymer, which is stable under storage conditions after being mixed homogeneously.

## Description

The invention relates to an aqueous composition for barrier coating, in particular an aqueous composition for barrier coating comprising a clay, a vinyl alcohol based polymer, a polyethylene imine and a polyether siloxane copolymer, which is stable under storage conditions after being mixed homogeneously.

Clay minerals are widely used in liquid formulations such as coatings, either to improve diffusion barrier or in order to enhance material properties such as stiffness or flame retardancy.

Gas barrier coatings, applied as aqueous solutions, are often used to coat plastic films used in flexible packaging applications. Such coatings often contain polyamines such as polyethylene imine (PEI) as adhesion promotor, in order to enhance the adherence to the plastic substrate. However, problematic is the incompatibility between the polyamine adhesion promotor and the clay-type mineral, since it results in agglomeration and/or precipitation of the clay particles, resulting in a reduction, often complete elimination of the clay's barrier effect.

US 2010/0323189 A1 discloses a barrier coating composition comprising an aqueous dispersion of clay, a polymer which is a polyvinyl alcohol and/or an ethylene vinyl alcohol copolymer, and a poly(ethyleneimine). Good shelf life of the composition can be achieved but the composition also contains high amount of isopropyl alcohol as co-solvent in addition to water. It is well known that such volatile organic solvent is toxic to human body.

Therefore, it is an object of the present invention to provide such aqueous composition for barrier coating which is less toxic, better workability and machinability for coating while maintaining the storage stability.

In this regard, it has been surprisingly found by the inventors that the addition of a polyether siloxane copolymer often used as wetting and defoaming agent in the art in such aqueous composition for barrier coating allows for the storage stability of such aqueous composition essentially free of organic solvent.

In a first aspect, the present invention thus relates to an aqueous composition for barrier coating, comprising:
(a) a clay,
(b) a vinyl alcohol based polymer,
(c) a polyethylene imine, and
(d) a polyether siloxane copolymer.

In a further aspect, the present invention relates to a method for preparing an aqueous composition for barrier coating, comprising:
(a) providing a clay, a vinyl alcohol based polymer, a polyether siloxane copolymer and water,
(b) mixing the components in step (a) in water, and obtain a mixture, and
(c) mixing a polyethylene imine with the mixture in step (b) and obtain a homogeneous aqueous composition.

In another aspect, the present invention relates to a barrier film comprising a flexible polymer film coated with a barrier coating comprising:
(a) a clay,
(b) a vinyl alcohol based polymer,
(c) a polyethylene imine, and
(d) a polyether siloxane copolymer.

In yet another aspect, the present invention further relates to a method for preparing a barrier film, comprising:
(a) coating a flexible polymer film with an aqueous composition for barrier coating according to the present invention, and
(b) allowing the barrier coating to dry.

Further preferred embodiments of the invention are set out in the claims.

In the present specification, the terms "a" and "an" and "at least one" are the same as the term "one or more" and can be employed interchangeably.

"One or more", as used herein, relates to at least one and comprises 1, 2, 3, 4, 5, 6, 7, 8, 9 or more of the referenced species. Similarly, "at least one" means one or more, i.e. 1, 2, 3, 4, 5, 6, 7, 8, 9 or more. "At least one", as used herein in relation to any component, refers to the number of chemically different molecules, i.e. to the number of different types of the referenced species, but not to the total number of molecules.

If reference is made herein to a molecular weight of a polymer or its components, this reference refers to the average number molecular weight Mₙ, if not explicitly stated otherwise. The number average molecular weight Mₙ can be calculated based on end group analysis (OH numbers according to DIN 53240) or can be determined by gel permeation chromatography according to DIN 55672-1:2007-08 with THF as the eluent. If not stated otherwise, all given molecular weights are those determined by end group analysis. The weight average molecular weight M_{w} can be determined by GPC, as described for Mₙ.

All percentages given herein in relation to the compositions or formulations relate to weight % relative to the total weight of the respective composition or formula, if not explicitly stated otherwise.

In the context of the present invention, "storage stable" or "stable under storage conditions" means that the aqueous composition for barrier coating does not appear any flocculation, separation, precipitation, lumping or gelling by visual observation at 25°C after the components being mixed homogeneously.

The aqueous composition for barrier coating according to the present invention comprises
(a) a clay,
(b) a vinyl alcohol based polymer,
(c) a polyethylene imine, and
(d) a polyether siloxane copolymer.

In the context of the present invention, any clay may be used in the aqueous composition for barrier coating as disclosed herein.

In various embodiments, the clay is an osmotically swellable clay.

In various embodiments, at least some of the clay is intercalated or exfoliated.

In various embodiments, the clay is a natural or synthetic layered silicate mineral. For instance, the clay may be a phyllosilicate.

In various embodiments, the clay is preferably selected from the group consisting of smectite, montmorillonite, saponite, beidellite, montmorillonite, hectorite, stevensite, vermiculite, kaolinite, hallosite, magadiite, and fluorohectorite.

The clay may contain cations naturally occurring within the molecular lattice of the clay, such as Ca²⁺, Mg, K⁺, Na⁺ or Li⁺. In various embodiments, the clay in the aqueous composition according to the present invention is a phyllosilicate. In various embodiments, the clay in the aqueous composition according to the present invention preferably is hectorite. Such hectorites are commercial available or can be synthesized by the method described for example in Stöter, M.; Kunz, D. A.; Schmidt, M.; Hirsemann, D.; Kalo, H.; Putz, B.; Senker, J.; Breu, J. Nanoplatelets of Sodium Hectorite Showing Aspect Ratios of 20000 and Superior Purity. Langmuir 2013, 29, 1280-1285.

The clay is typically present in the aqueous composition in an amount of from 0.05 to 10% by weight, preferably from 0.1 to 5% by weight of the composition.

The aqueous composition for barrier coating also comprises a vinyl alcohol based polymer. There is no particular restriction on the nature of the vinyl alcohol based polymer used in the present invention, provided that it can form a solution or dispersion in a suitable liquid vehicle such as an aqueous medium. Such polymers have a high proportion of free hydroxy groups which can form hydrogen bonds with salt groups in a metal silicate or other constituent of a clay.

The vinyl alcohol based polymer is preferably selected from polyvinyl alcohol (PVOH), polyvinyl butyral (PVB), butenediol-vinyl alcohol copolymer (BVOH), vinyl acetate-vinyl alcohol copolymer, (meth)acrylate-vinyl alcohol copolymer, and combination thereof.

Preferably, the weight average molecular weight of the vinyl alcohol based polymer to be used in the aqueous composition is in a range of between 5000 and 50000 g/mol. Such vinyl alcohol based polymers are commercially available from e.g. Aquaseal X2281 from Paramelt.

The vinyl alcohol based polymer is present in the aqueous composition in an amount of from 5 to 30% by weight, preferably from 10 to 25% by weight of the composition.

The aqueous composition according to the present invention further comprises a polyethylene imine as adhesion promoter for the barrier coating. The polyethylene imine may have a number averaged molecular weight from 1000 to 100000 g/mol, preferably from 10000 to 50000 g/mol. Preferably, the polyethylene imine is branched and/or modified. Examples of such polyethlyene imines are Loxanol MI-6730 or Loxanol MI 6735, or Lupasol series products from BASF.

The polyethylene imine is present in the aqueous composition in an amount of from 0.1 to 1% by weight, preferably from 0.2 to 0.8 % by weight of the composition.

The aqueous composition for barrier coating further comprises a polyether siloxane copolymer. The incorporation of polyether siloxane copolymer allows for an excellent storage stability of the aqueous composition for barrier coating according to the present invention. The polyether siloxane copolymer may be a copolymer of a polydimethylsiloxane with alkylene oxide segments, preferably with ethylene oxide and/or propylene oxide segments.

Preferably the polyether siloxane copolymer is a water-soluble linear polyether siloxane with terminal polyether blocks. Commercial examples of such polyether siloxane copolymer are Tegopren 5840, Tegopren 5843, Tegopren 5847, Tegopren 5851, Tegopren 5863, Tegopren 5878, or Tegopren 5890 from Evonik, and BYK-017, BYK-018, BYK-019, BYK-021, BYK-023, BYK-024, BYK-025, BYK-028, BYK-044, BYK-093, BYK-094, BYK-1610, BYK-1615; BYK-1650, BYK-1730, BYK-1770, or BYK-1798 from BYK.

The polyether siloxane copolymer is present in the aqueous composition in an amount of from 0.05 to 1% by weight, preferably from 0.2 to 0.8 % by weight of the composition.

According to the present invention, the aqueous composition preferably comprises no more than 10% by weight, preferably no more than 5% by weight, more preferably no more than 1% by weight, in particular no more than 0.5% by weight of a solvent other than water, such as an alcohol, a ketone or an ester.

In one embodiment, the present aqueous composition comprises no more than 10% by weight of the aqueous composition, preferably no more than 1% by weight of the aqueous composition, and more preferably contains no ethanol, n-propanol, isopropyl alcohol, ethyl acetate or acetone, by weight of the aqueous composition.

In another embodiment, the aqueous composition only contains water as solvent, and preferably contains from 40% to 90% by weight, more preferably from 50% to 80% by weight of water based on the weight of the aqueous composition.

If desired, in addition to the vinyl alcohol based polymer, other polymers or resins may be included in the aqueous composition, provided these co-resins are themselves compatible in the final composition. Examples of such polymers and resins include solution acrylics, acrylic emulsions, polyesters, alkyds, sulphopolyesters, polyurethanes, vinyl acetate emulsions, poly(vinyl pyrrolidone), polyamides, polysaccharides, proteins, epoxies, etc.

In one embodiment, the aqueous composition for barrier coating is advantageously supplied as a single composition due to its improved storage stability. However, in an alternative embodiment the aqueous composition is supplied as a two-part composition, one part comprising a solution or dispersion of a polymer composition comprising vinyl alcohol and any other optional polymers, PEI, and the other part comprising an aqueous dispersion of a clay and a polyether siloxane copolymer.

The preparation of the aqueous composition for barrier coating according to the present invention comprises the sequence/steps of
(a) providing a clay, a vinyl alcohol based polymer and a polyether siloxane copolymer,
(b) mixing the components in step (a) in water, and obtain a mixture, and
(c) subsequently providing a polyethylene and mixing the polyethylene imine with the mixture from step (b) and obtain a homogeneous aqueous composition.

In one embodiment, the clay and/or vinyl alcohol based polymer can be premixed homogeneously with water as a solution or dispersion before step (a) to facilitate the preparation.

A storage stable aqueous composition for barrier coating can be obtained by the above preparation. The stable aqueous composition for barrier coating does not appear any flocculation, separation or gelling by visual observation at 25°C after the components being mixed homogeneously. Surprisingly, the aqueous composition is storage stable for at least 5 days. In a preferred embodiment, the aqueous composition is storage stable for at least 10 days. In a more preferred embodiment, the aqueous composition is storage stable for at least 30 or even at least 60 days.

Another aspect of the present invention provides a barrier film comprising a flexible polymer film coated with a barrier coating comprising
(a) a clay,
(b) a vinyl alcohol based polymer,
(c) a polyethylene imine, and
(d) a polyether silicone copolymer.

The barrier coating can be prepared by a method comprising the steps of
(a) coating a flexible polymer film with an aqueous composition for barrier coating according to the present invention, and
(b) allowing the barrier coating to dry.

These barrier coating compositions can be applied by conventional printing methods, in particular flexographic and gravure printing methods, requiring no specialized equipment.

The time taken for the barrier coating composition to cure fully will vary depending on the nature of the aqueous composition and will be well known to those skilled in the field.

The overall solids content of the aqueous composition of the invention is typically in the range of 5% to 30% (w/w), and preferably 10% to 20% (w/w).

The aqueous barrier coating composition of the present invention comprising a clay, a vinyl alcohol based polymer, a polyethylene imine and a polyether silicone copolymer may be applied to a substrate by any conventional means. The solvent may then be removed, e.g. by heating, leaving a film comprising the clay dispersed through the polymers on the substrate. The resulting barrier material may then be adhered to a further flexible plastics sheet or film to form a laminate material if desired.

The thickness of the barrier coating of the present invention will depend in part on the ability of the clay to form a continuous, coherent coating layer. However, in general, the coating should be from 0.05 to 3 µm, preferably 0.3 to 1 µm thick. The process of the invention advantageously enables the coating to be applied at an optimum thickness that provides adequate gas barrier properties without an unnecessarily thick coating being applied.

There is no particular restriction on the nature of the flexible polymer film, and any material suitable for the intended use may be employed. However, where the matter being packaged with the barrier material of the present invention is a foodstuff, it will normally be preferred that the plastics film or other substrate should be food grade. Examples of suitable materials include polyolefins, such as polyethylene or polypropylene; polyesters, such as polyethylene terephthalate, polybutylene terephthalate or polyethylene naphthenate; polyamides, such as nylon-6 or nylon-66; and other polymers, such as polyvinyl chloride, polyimides, acrylic polymers, polystyrenes, celluloses, or polyvinylidene chloride. It is also possible to use copolymers of any compatible two or more of the monomers used to produce these polymers. It is also possible to use films like above but coated with a silicone oxide or Aluminium oxide or vapor-deposited metal layer. Furthermore, barrier coatings of the present invention may be included in adhesively formed laminates comprising paper substrates (such as polyester and polyolefin coated paperboards commonly encountered in food packaging). In one embodiment, the flexible polymer film is a polyester film.

The substrate is preferably treated by corona discharge known in the art immediately prior to its being coated with the composition of the present invention.

An adhesive may be used to prepare a laminate material with the barrier coating and any adhesive commonly used for the adhesion of two or more plastics films may be employed in the present invention. Examples of suitable adhesives include solvent-based polyurethanes and solvent-free polyurethane adhesives. As well as polyurethane adhesives, epoxy-based adhesives may be used.

The adhesive may be applied directly to one of the films and then adhered to the barrier coating on the other film, or it may be applied to the barrier coating on one film and then adhered to the other film. In any case, the order of layers will be: a film; the barrier coating; an adhesive; and another film. If desired, layers of other materials may be interposed between any two of these layers, or on either side of the two film substrates having the barrier coating between them.

The invention is further illustrated by the following non-limiting Examples.

### Materials:

Hectorite is a synthetic smectite type clay mineral having an aspect ratio of larger than 500:1, obtained from BYK-Chemie GmbH.

PVOH is an about 18 wt.% water solution of a vinyl alcohol based polymer, obtained from Paramelt under the trade name Aquaseal X2281.

PEI is a branched polyethylene imine having a weight average molecular weight of about 25000 g/mol obtained under the trade name of Loxanol MI 6735 from BASF.

Polyether siloxane copolymer-1 is a copolymer of a polydimethylsiloxane with ethylene oxide and/or propylene oxide segments obtained from Evonik under the trade name of Tegopren 5890.

Polyether siloxane copolymer-2 is a copolymer of a polydimethylsiloxane with ethylene oxide and/or propylene oxide segments obtained from BYK under the trade name of BYK-017.

Polyether siloxane copolymer-3 is a copolymer of a polydimethylsiloxane with ethylene oxide and/or propylene oxide segments obtained from BYK under the trade name of BYK-024.

The aqueous barrier coating compositions were prepared as follows:

Hectorite was exfoliated with water through mixing and stirring until a homogenous suspension containing 5 wt.% of hectorite was obtained. Subsequently the PVOH water solution was mixed with the hectorite suspension. Then, if contained in the compositions, the polyethersiloxane copolymer was admixed through stirring for at least 1 hour. In the final step the PEI was admixed. The formulations of the compositions are shown in Table 1. After the final compositions were mixed to homogeneity, the appearance of each composition was checked for storage stability. If any flocculation, separation, precipitation, lumping or gelling was observed in the final composition by visual observation at 25°C immediately or at 3 min, 10 min, 30 min, 1 h, 2 h, 3 h, 6 h, 12 h, 24 h, 2 days, 3 days, 1 week, 2 weeks, 3 weeks, 4 weeks, 2 months or 3 months after the components were mixed homogeneously and the final composition was stored still, the composition will be evaluated as "Fail" for the storage stability test. Otherwise, the test was evaluated as "Pass". The test results are shown in Table 1.

**Table 1. Formulations of aqueous compositions in gram and storage stability test results**

| Component | Example 1 | Example 2 | Example 3 | Comparative Example 1 | Comparative Example 2 |
|---|---|---|---|---|---|
| Hectorite suspension | 4.6 g | 4.6 g | 4.6 g | 4.6 g | 4.6 g |
| PVOH | 64.5 g | 64.5 g | 64.5 g | 64.5 g | 64.5 g |
| PEI | 0.4 g | 0.4 g | 0.4 g | 0.4 g | 0.2 g |
| Polyethersiloxane copolymer-1 | 0.4 g | - | - | - | - |
| Polyethersiloxane copolymer-2 | - | 0.4 g | - | - | - |
| Polyethersiloxane copolymer-3 | - | - | 0.4 g | - | - |
| Water | 25 g | 25 g | 25 g | 25 g | 25 g |
| Test result of storage stability | Pass | Pass | Pass | Fail | Fail |

As can be seen from Table 1, Examples 1 to 3 containing polyethersiloxane copolymers, compared to the comparative examples, largely increased the storage stability of the PVOH/clay/PEI based aqueous composition, and are suitable for barrier coating application with improved machineability and workability.

## Claims

1. An aqueous composition for barrier coating, comprising:
(a) a clay,
(b) a vinyl alcohol based polymer,
(c) a polyethylene imine, and
(d) a polyether siloxane copolymer.

2. The aqueous composition according to claim 1, wherein the clay is a natural or synthetic layered silicate mineral, preferably selected from the group consisting of smectite, montmorillonite, saponite, beidellite, montmorillonite, hectorite, stevensite, vermiculite, kaolinite, hallosite, magadiite, fluorohectorite, and combination thereof, and more preferably is hectorite.

3. The aqueous composition according to claim 1 or 2, wherein at least some of the clay is intercalated or exfoliated.

4. The aqueous composition according to any one of the preceding claims, wherein the vinyl alcohol based polymer is selected from polyvinyl alcohol (PVOH), polyvinyl butyral (PVB), butenediol-vinyl alcohol copolymer (BVOH), vinyl acetate-vinyl alcohol copolymer, (meth)acrylate-vinyl alcohol copolymer, and combination thereof, and more preferably is polyvinyl alcohol.

5. The aqueous composition according to any one of the preceding claims, wherein the polyethylene imine has a number averaged molecular weight from 1000 to 50000 g/mol, preferably from 10000 to 30000 g/mol.

6. The aqueous composition according to any one of the preceding claims, wherein the polyether siloxane copolymer is a copolymer of a polydimethylsiloxane with alkylene oxide segments, preferably with ethylene oxide and/or propylene oxide segments.

7. The aqueous composition according to any one of the preceding claims, wherein the composition comprises no more than 10% by weight, preferably no more than 5% by weight, more preferably no more than 1% by weight, in particular no more than 0.5% by weight of a solvent other than water, such as an alcohol, a ketone or an ester, based on the weight of the aqueous composition.

8. The aqueous composition according to any one of the preceding claims, wherein the clay is present in an amount of from 0.05 to 10% by weight, preferably from 0.1 to 5% by weight of the composition.

9. The aqueous composition according to any one of the preceding claims, wherein the vinyl alcohol based polymer is present in an amount of from 5 to 30% by weight, preferably from 10 to 25% by weight of the composition.

10. The aqueous composition according to any one of the preceding claims, wherein the polyethylene imine is present in an amount of from 0.1 to 1% by weight, preferably from 0.2 to 0.8 % by weight of the composition.

11. The aqueous composition according to any one of the preceding claims, wherein the polyether siloxane copolymer is present in an amount of from 0.05 to 1% by weight, preferably from 0.2 to 0.8 % by weight of the composition.

12. The aqueous composition according to any one of the preceding claims, wherein the aqueous composition is storage stable for at least 5 days, preferably for at least 10 days, more preferably for at least 30 days, and in particular for at least 60 days.

13. A method for preparing an aqueous composition for barrier coating according to any one of claims 1 to 12, comprising
(a) providing a clay, a vinyl alcohol based polymer and a polyether siloxane copolymer,
(b) mixing the components in step (a) in water, and obtain a mixture, and
(c) providing a polyethylene imine and mixing the polyethylene imine with the mixture in step (b) and obtain a homogeneous aqueous composition.

14. A barrier film comprising a flexible polymer film coated with a barrier coating comprising
(a) a clay,
(b) a vinyl alcohol based polymer,
(c) a polyethylene imine, and
(d) a polyether siloxane copolymer.

15. A method for preparing a barrier film, comprising
(a) coating a flexible polymer film with an aqueous composition for barrier coating according to any one of claims 1 to 12, and
(b) allowing the barrier coating to dry.
